Europäisches Patentamt

European Patent Office

Office européen des brevets

(11) Publication number: **0 227 867**
**A1**

# (12) EUROPEAN PATENT APPLICATION

(21) Application number: 85309518.0

(51) Int. Cl.⁴: **B62D 25/18**

(22) Date of filing: 30.12.85

(43) Date of publication of application:
08.07.87 Bulletin 87/28

(84) Designated Contracting States:
DE FR NL SE

(71) Applicant: **Typrod Limited**
**Lydney Industrial Estate Harbour Road**
**Lydney Gloucestershire GL15 4EP(GB)**

(72) Inventor: **Ursell, Barrie**
**White Cottage**
**Symonds Yat West Herefordshire(GB)**
Inventor: **Worgan, Colin**
**4 Wollstonecroft Road**
**Bournemouth Hampshire(GB)**
Inventor: **Palmer, Frederick**
**7 Woodland Rise**
**Lydney Gloucestershire(GB)**

(74) Representative: **Corfield, Peter Ralph et al**
**A. R. Davies & Co. 27, Imperial Square**
**Cheltenham, Glos. GL50 1RQ(GB)**

(54) A spray reducing device for a vehicle.

(57) A device for reducing dispersion of fluids, such as water, mud or other material, thrown from a road wheel of a moving vehicle comprises a panel 10, 11 securable to the vehicle to intercept the fluids, the surface of the panel presented to the wheel having a plurality of generally downwardly curved ribs 14 extending across a substantial proportion of the width of the panel, the sides of the panel having elongate wall portions 15, the arrangement being such that fluid impinging on the surface is directed across the surface by the ribs 14 towards the side wall portions 15 which direct it downwardly to the road, thus reducing the spray produced by a moving vehicle.

FIG. I.

## "A spray reducing device for a vehicle"

The invention relates to spray reducing devices for vehicles, that is to say devices for reducing the dispersion of fluids thrown from the road wheels of a vehicle when it is travelling over a wet roadway.

As is well known, the road wheels of a vehicle travelling on a wet surface pick up fluid, such as rain water, mud, slush or snow, from the roadway and disperse the fluids, by centrifugal force, as a fine spray. With large vehicles the quantity of spray produced can be considerable and a dense mass is created which can seriously restrict the vision of the driver of a following vehicle, making it difficult and dangerous to see and to overtake the vehicle producing the spray.

Attempts have been made to overcome this problem by the use of so-called mud-flaps which extend downwardly adjacent the wheels, particularly the rear wheels of a vehicle, usually behind these, to intercept the fluids being thrown from the road wheels. However, conventional mud-flaps are generally fairly ineffective since fluid droplets impinging on the surface of the mud-flap are merely atomised and deflected laterally by the flap, to be picked up by the turbulent airflow around the rear of the vehicle. Such mud-flaps often, therefore, merely have the effect of reducing the backward dispersion of fluid particles at the expense of increasing the lateral dispersion.

The present invention sets out to provide an improved form of flap which will intercept fluid thrown from the wheels of a moving vehicle in a manner to reduce the overall dispersion of such fluids as a mist into the air around the vehicle.

Accordingly, the invention provides a device for reducing dispersion of fluids thrown from a road wheel of a moving vehicle, comprising a panel having means for mounting on the vehicle in a position to intercept fluids thrown from a road wheel thereof, the panel having, on a surface presented, in use, towards the road wheel, a plurality of generally curved ribs curved downwardly towards their ends and provided across a substantial proportion of the width of such surface, and, at each lateral side of said surface, and elongate wall portion provided to guide fluid flowing across the surface along the ribs, in a downward direction.

Due to the provision of the ribs, fluid droplets impinging on the panel tend to flow along the ribs which reduces the momentum of the droplets of fluid and tends to retain them on the surface of the panel. The wall portions at each lateral side of the flap prevent fluid from being dispersed laterally from the sides of the flap and the retained fluid then runs downwards to drain back on to the road surface.

The following is a more detailed description of embodiments of the invention, reference being made to the accompanying drawings in which:

Figure 1 is a front view of a spray reducing device or flap constructed in accordance with the invention,

Figure 2 is a cross-sectional view through the device on the line 2-2 in Figure 1,

Figure 3 is a cross-sectional view through the device on the line 3-3 in Figure 1,

Figure 4 is a part view of an alternative construction of spray reducing device, and

Figure 5 is a cross-sectional view on the line 5-5 in Figure 4.

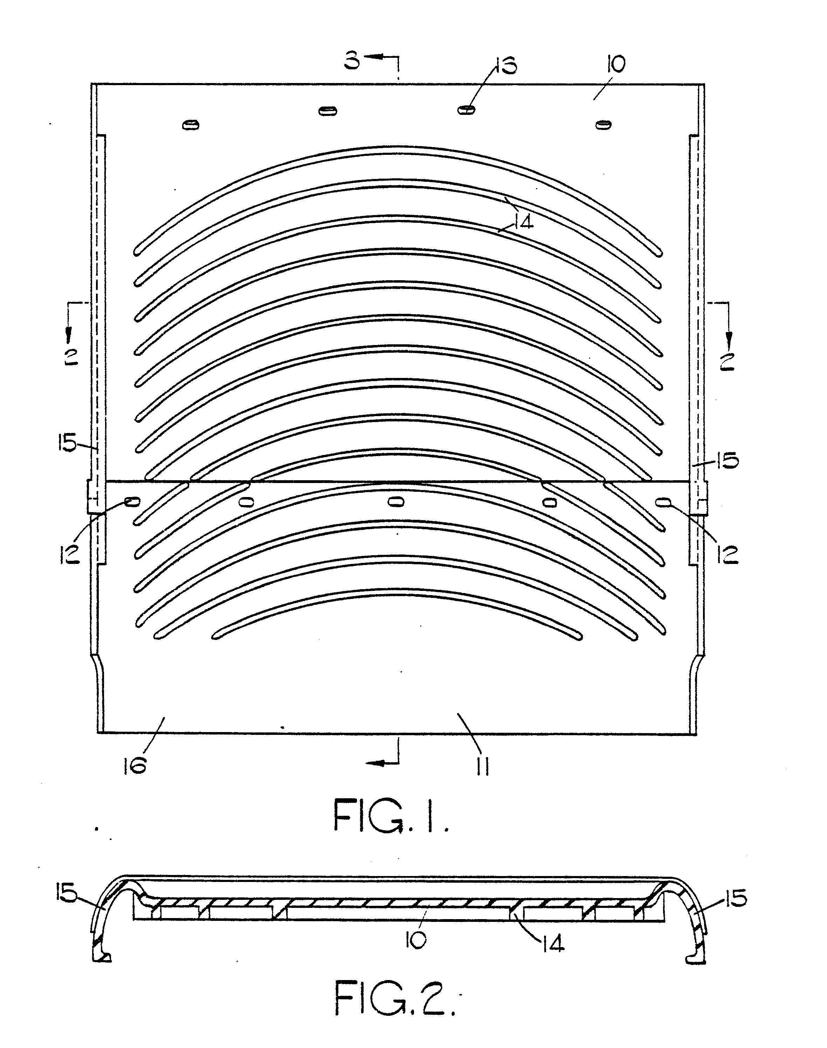

Referring to Figures 1, 2 and 3, the device shown is in the form of a generally rectangular, two piece flap moulded from rubber or synthetic rubber material. The two components comprise an upper flap portion 10 and lower flap portion 11 secured together by bolts 12. The upper flap portion 10 has an upper plain margin, in this case angled to the general plane of the flap and with fixing holes 13 through which pass any suitable fastening means, such as bolts, for attaching the flap to a mud wing of a vehicle adjacent a road wheel thereof, the flap usually being arranged to extend downwardly at a distance from the rear of the road wheel or pair of wheels.

On the surface of the flap which is presented to the road wheel there are formed curved ribs or louvres 14. As seen in Figure 1 these are of arcuate form and are generally of equal radii. The arcuate configuration extends substantially right across the otherwise flat surface but terminates a short distance from the vertical lateral sides of the flap. The ribs are furthermore curved downwardly towards their ends. The spacing and the depth and arcuate forms of the ribs 14 are significant, though some variation from the dimensions shown is permissible without detracting from the performance of the device.

In this example the rib depth is approximately equal to half the spacing between adjacent ribs. The ribs 14, in this example, span most of the width of the flap. A minimum of 75% of the width appears to be desirable.

The ribs are formed on both upper and lower flap portions 10, 11 and those on the margin between the two portions have sections on each portion, to provide continuity.

Adjacent each lateral edge, the flap has integrally moulded, curved section, lipped wall portions 15. The curvature of the section blends with the lateral edges of the flat main part of the flap, as seen in Figure 2. The lips are at the outer extremities as seen in that Figure.

A plain, unribbed section 16 is provided at the base of the flap, this providing a flexible part, more easily deflected, if an obstruction meets the flap.

If an obstruction is such as to tend to tear the flap off, the bolts 12 connecting upper and lower portions 10, 11 will pull out before those connecting the whole flap to the mud wing, so that only the lower portion 11 may be lost. This minimises replacement costs.

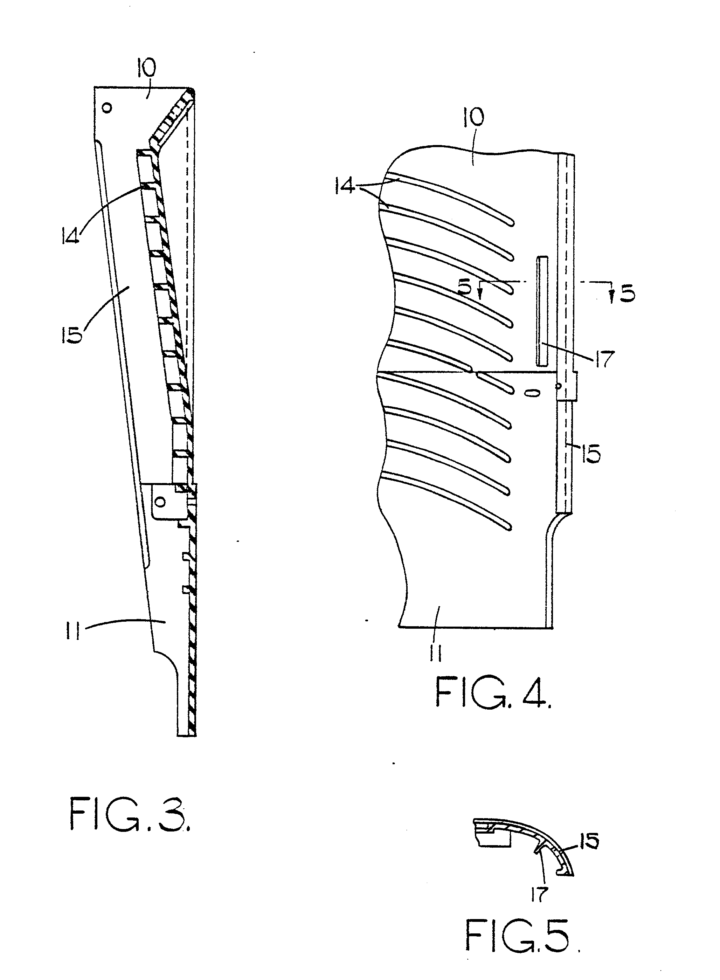

Figures 4 and 5 show an alternative construction in which there are additional ribs 17, inside the lateral extremities and outside the zone covered by the arcuate ribs 14 and fairly low down on the flap. These are in the region at which the upper and lower flap portions 10, 11 are joined, and portions of these additional ribs 17 are therefore formed on the two flap portions 10, 11 respectively. These additional ribs 17 serve to guide the fluid downwardly and further prevent this leaving the edges of the flap as a mist or spray.

In use, fluid thrown up by the wheel of the vehicle and impinging on the surface of the flap is intercepted by the ribs 14, thus reducing the momentum of the droplets and tending to retain them on the surface of the flap. The curvature of the ribs causes the fluid to flow towards the lateral sides of the flap and then down the verticle walls 15 to drain off the bottom of the flap onto the road surface.

Instead of the wall portions of the flap being curved, rectangular channel section members, separately formed or moulded on, may be used. The shape of these edge formations may be dictated by the shape of the mud wing with which it is intended to be used.

Instead of being formed of rubber or synthetic rubber, as described, the panel and channel portions may be formed from any other suitable material such as plastics, metal or combinations thereof.

The ribs 14 on the flap are described as integrally formed with the material of the flap. They could, however, also be formed separately and attached to the flap.

The wall portions providing the channels at the sides of the panel may be so designed and constructed to provide an anti-sail feature, thus keeping the device in the correct relationship to the vehicle wheels.

Furthermore, in the alternative construction of Figures 4 and 5, the additional ribs 17 may be provided on either or both of the upper and lower flap portions 10 and 11,

Additionally the plain, unribbed section 16 of the lower flap portion 11 may be made of rubber of lesser hardness than the rubber of which the remainder of the portion 11 is made, so as to render the section 16 more flexible, thus reducing damage to the flap if it meets an obstruction and extending the life of the flap.

## Claims

1. A device for reducing dispersion of fluids thrown from a road wheel of a moving vehicle, comprising a panel 10 having means 13 for mounting on the vehicle in a position to intercept fluids thrown from a road wheel thereof, characterised in that the panel 10 has, on a surface presented, in use, towards the road wheel, a plurality of generally curved ribs 14 curved downwardly towards their ends and provided across a substantial proportion of the width of such surface, and, at each lateral side of said surface, an elongate wall portion 15 is provided to guide fluid flowing across the surface along the ribs 14, in a downward direction.

2. A device as claimed in claim 1 characterised in that the ribs 14 are of arcurate form, having approximately the same radii.

3. A device as claimed in claim 1 or claim 2 characterised in that the depth of the ribs 14 is approximately equal to half the spacing between adjacent ribs.

4. A device as claimed in any one of the preceding claims characterised in that the flap is made in two portions 10, 11, connected together by fastening means 12.

5. A device as claimed in claim 4 characterised in that the fastening means 12 between the two portions 10, 11 of the flap is less strong than fastening means 13 whereby the whole flap is secured to the vehicle.

6. A device as claimed in claim 4 or claim 5 characterised in that the ribs 14 are substantially continuous between the two portions 10, 11.

7. A device as claimed in any one of the preceding claims characterised in that the lower edge 16 of the flap is without ribs, so as to afford greater flexibility in this section.

8. A device as claimed in any one of the preceding claims characterised in that additional ribs 17 extending, in use, vertically are positioned near the lateral edges of the flap.

9. A device as claimed in any one of the preceding claims characterised in that the wall portions 15 are of curved section with lips at their edges.

10. A device as claimed in any one of claims 1 to 8 characterised in that the wall portions 15 are of generally rectangular channel section.

11. A device as claimed in any one of the preceding claims characterised in that a lower part 16 of the flap is made of different material to the remainder of the flap, so as to provide greater flexibility in this part.

0 227 867

FIG. I.

FIG. 2.

0 227 867

FIG.3.

FIG. 4.

FIG.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | AT-B- 268 903 (ZIZALA)<br>* figures 1-6 *<br>--- | 1,9 | B 62 D 25/18 |
| A | GB-A-1 447 327 (ARENHOLD)<br>* figure *<br>--- | 1 | |
| A | GB-A-1 259 593 (BROOKER)<br>* page 1, lines 59-73; figures 1, 2 *<br>--- | 1,4,5 | |
| A | US-A-2 714 015 (SHERMAN)<br>* figures 1-4 *<br>----- | 1 | |

**TECHNICAL FIELDS SEARCHED (Int. Cl.4)**

B 62 D 25/00

The present search report has been drawn up for all claims

| Place of search | Date of completion of the search | Examiner |
|---|---|---|
| BERLIN | 05-08-1986 | LUDWIG H J |